# EUROPÄISCHE PATENTANMELDUNG

(11) **EP 1 522 451 A2**
(43) Veröffentlichungstag der Anmeldung: **13.04.2005**
(21) Anmeldenummer: 04022098.0
(22) Anmeldetag: 16.09.2004
(51) Int. Cl.: B60N 2/02, B60N 2/22, B60R 21/01

(54) **Sensor zur Erfassung der Winkelstellung einer Sitzlehne**

(30) Priorität: 08.10.2003 EP 03022846
(71) Anmelder: Tyco Electronics AMP GmbH, 64625 Bensheim (DE)
(72) Erfinder: Degen, Michael, 67376 Harthausen (DE); Hoffelder, Bernd, 67354 Römerberg (DE)
(74) Vertreter: Grünecker, Kinkeldey, Stockmair & Schwanhäusser Anwaltssozietät

(57) **Zusammenfassung**

Die Erfindung betrifft eine Vorrichtung zur Erfassung der Position einer Rückenlehne (3) eines verstellbaren Fahrzeugsitzes, bestehend aus einem Sitzteil und der Rückenlehne, wobei zur Verstellung des Fahrzeugsitzes eine drehbare Stellwelle vorgesehen ist. Weiterhin beschreibt die Erfindung einen magnetischen Wegsensor, der ein Signal ausgibt, welches die Längsbewegung der Stellwelle repräsentiert, und eine elektronische Verarbeitungseinheit zur Berechnung der Position der Rückenlehne aus dem vom Wegsensor ausgegebenen Signal. Die Erfindung bezieht sich auch auf einen Fahrzeugsitz sowie ein entsprechendes Verfahren zur Erfassung der Position.

## Beschreibung

Die vorliegende Erfindung bezieht sich auf einen Sitzlehnensensor, der sich in einem Fahrzeugsitz befindet und zur Messung der Lehnenstellung eines Autositzes verwendet wird.

Die genaue Stellung von verschiedenen Teilen von Autositzen ist wichtig mit Bezug auf eventuellen Airbaggebrauch. Wenn der Sitz und dadurch der Fahrer näher am Lenkrad ist, darf der Airbag nicht zu groß aufgeblasen werden, da sonst eine Verletzungsgefahr für den Fahrer besteht. Wenn der Sitz, und dadurch die auf dem Sitz befindliche Person, beispielsweise Fahrer oder Beifahrer, weit weg vom Lenkrad ist, also in einer im Fahrzeug hinteren Stellung, muss der Airbag verhältnismäßig.größer werden, da sonst im Falle eines Unfalls die Gefahr eines Schleudertraumas für den Fahrer besteht. Um die benötigte genaue Position der verschiedenen Teile eines Fahrzeugsitzes zu erfassen, werden Sensoren eingesetzt.

In der Offenlegungsschrift US 6,573,673 werden Beispiele für solche Sensoren genannt. Diese umfassen Sensoren, die nicht im Sitz eingebaut sind, sondern Bestandteil der Karosserie sind, und optisch die Sitzeinstellung erkennen. In dieser Offenlegungsschrift wird auch erwähnt, dass man beispielsweise zur Implementierung ein Drehpotentiometer mit einer Einstellschraube anbringen könnte, um die Sitzeinstellung der Größe des Fahrers oder Beifahrers anzupassen.

In der Offenlegungsschrift WO 96/41557 ist ein Flugzeugsitz beschrieben, bei dem die Position der verschiedenen Sitzteile, u. a. der Rückenlehne durch einen Ein-Aus-Schaltsensor angegeben wird. Hier kann also nur festgestellt werden, ob der Sitz sich in einer der beiden Extrempositionen oder dazwischen befindet. Die genaue Position zwischen diesen beiden Stellungen kann jedoch nicht ermittelt werden.

In der Offenlegungsschrift US 6,593,735 wird ein magnetischer Sensor eingesetzt, um die Längsposition des Autositzes zu erfassen. Es handelt sich hier um eine lineare Vorwärts-Rückwärtsbewegung auf einer Schiene, die bestimmt wird.

Bisher gibt es keinen Sensor für die Rückenlehneneinstellung, der zufriedenstellend genau die Absolutposition der Rückenlehne erfassen kann. Diese Aufgabenstellung wird dadurch erschwert, dass die Rückenlehne durch eine sich exzentrisch bewegende Welle an dem Sitzteil angebracht ist. Diese Welle beschreibt bei ihrer Betätigung gleichzeitig Auf- und Abbewegungen. Dies erzeugt eine elliptische Bewegung der Lehne, die nur schwer auf eine einfache Art und Weise von Sensoren erfasst werden kann.

Aufgabe der Erfindung ist daher, ein Verfahren und einen Rückenlehnensensor anzugeben, mit dem auf einfache Weise mit Genauigkeit die Absolutposition der Rückenlehne erfasst werden kann. Darüber hinaus soll ein Fahrzeugsitz angegeben werden, der einen derartigen Sensor aufweist.

Diese Aufgabe wird durch den Gegenstand der unabhängigen Ansprüche 1, 7 und 13 gelöst. Dabei liegt der vorliegenden Erfindung die Idee zugrunde, dass an der Stellwelle der Rückenlehne ein magnetischer Wegsensor angebracht wird, der ein absolutes lineares Signal zur Winkelstellung der Sitzlehne ausgibt. Dieses lineare Signal kann beispielsweise von einem Airbagsteuergerät zur Berechnung der Sitzeinstellung verwendet werden. Der Wegsensor befindet sich vorzugsweise auf einem Gewinderohr, in dem sich die Stellwelle dreht. Dies ermöglicht eine einfache und vollständige Integration des Sensors in den Fahrzeugsitz.

Vorteilhafte Weiterbildungen der vorliegenden Erfindung sind Gegenstand mehrerer Unteransprüche.

Die Verwendung eines magnetischen Wegsensors besitzt den Vorteil, dass die Längsbewegung der Stellwelle berührungslos gemessen werden kann. Dies hat den Vorteil, dass keine Reibung zwischen dem Gewinderohr und dem Sensor entsteht, und dadurch der Verschleiß der Teile minimal ist.

Dadurch, dass der magnetische Wegsensor ein lineares Wegsignal abgibt, empfängt das Steuergerät dieses lineare Signal und kann es ohne komplizierte Berechnungen und Algorithmen direkt in ein Positionssignal umwandeln. Dies vereinfacht die Berechnungseinheit im Steuergerät.

Vorzugsweise besteht der Wegsensor aus einem Erfassungsteil und einem bewegbaren Magneten. Dies ermöglichst die genaue Positionsbestimmung eines sich bewegenden Teiles, wie in diesem Fall der Stellwelle.

Das lineare Signal des magnetischen Wegsensors kann zur Weiterverarbeitung in ein Airbagsteuergerät eingespeist werden. Dies besitzt zum einen den Vorteil, dass die dort vorhandenen Rechen- und Steuereinheiten mit verwendet werden können und zum anderen, dass das Signal dort lokal bereitgestellt wird, wo es ohnehin zur Bestimmung der aufgeblasenen Größe des Airbags verwendet wird.

Das Signal des magnetischen Wegsensors kann auch zu einem Sitzsteuergerät geführt werden, in welchem die Einstellung des Sitzes anhand der Sensorsignale verändert werden kann. Dies erleichtert eine besonders genaue Komforteinstellung des Sitzes oder eine automatische Einstellung einer gespeicherten Sitzposition.

Vorzugsweise befindet sich in der Rückenlehne des Fahrzeugsitzes ein Gewinderohr, in welchem sich die Stellwelle dreht. Dies ergibt einen einfach aufgebauten Fahrzeugsitz mit integrierter Verstellmöglichkeit.

Es ist weiter von Vorteil, wenn auf diesem Gewinderohr in der Rücklehne der Wegsensor angebracht wird, da dies eine einfache Anbringung ermöglicht und dadurch der magnetische Wegsensor im Fahrzeugsitz integriert ist.

Dieser magnetische Wegsensor und die Art und Weise der Erfassung der Rückenlehnenposition ist nicht darauf beschränkt, dass die Stellwelle manuell eingestellt wird. Vielmehr kann die Rückenlehne über die Stellwelle durch Kopplung mit einem elektrischen Sitzmotor angetrieben werden, ist also unabhängig von der Art und Weise, wie die Einstellung bewirkt wird.

Der Vorteil der Positionsmessung an der Stellwelle ist, dass diese sich linear bewegt und dadurch keine komplizierten Berechnungen angestellt werden müssen. Dies vereinfacht die Ausführung der elektronischen Verarbeitungseinheit.

Der erfindungsgemäße Sitzlehnensensor gibt selbst dann ein lineares Signal aus, wenn sich die Stellwelle zur Einstellung der Rückenlehne exzentrisch bewegt. Daher kann selbst in diesem Fall die Absolutposition der Rückenlehne auf einfache Art und Weise bestimmt werden, und muss nicht durch komplizierte Berechnungen festgestellt werden.

Anhand der in den beiden Zeichnungen dargestellten Ausgestaltungen, wird die Erfindung im folgenden näher erläutert. Ähnliche oder korrespondierende Einzelheiten sind in den Figuren mit denselben Bezugszeichen versehen. Es zeigen:
- Figur 1: eine schematische Darstellung eines Fahrzeugsitzes;
- Figur 2: einen Längsschnitt der Sensoranbringung am Gewinderohr;
- Figur 3: einen Querschnitt der Gewinderohranordnung.

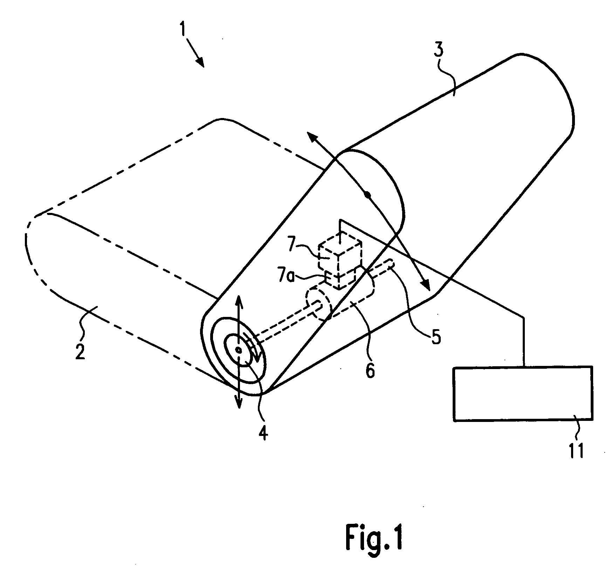

Figur 1 ist die schematische Darstellung eines Fahrzeugsitzes 1. Dieser Fahrzeugsitz 1 besteht aus einem Sitzteil 2 und einer Rückenlehne 3. Diese sind durch ein Gelenk mit einem Betätigungselement 4 verbunden. Dieses Betätigungselement 4, das in diesem Fall ein Handrad ist, ermöglicht die Einstellung der Rückenlehne 3 in verschiedene Positionen. Dieses Betätigungselement 4 dreht eine Stellwelle 5, die sich in einem Gewinderohr 6 befindet. Über diesem Gewinderohr 6 in der Rückenlehne 3 ist das Erfassungsteil 7a des Sensors 7 angeordnet. Dies bedeutet, dass der Sensor 7 in die Rückenlehne 3 des Sitzes 1 integriert ist. Beim Betätigen des Betätigungselements 4 beschreibt die Stellwelle 5 und die Rückenlehne 3 eine elliptische Bewegung. Das Signal des Sensors wird an ein Steuergerät 11, beispielsweise Airbag- und/oder elektrisches Sitzsteuergerät weitergeleitet, in dem die genaue Position der Rückenlehne für die Berechnung der Größe des aufzublasenden Airbags bzw. für die Einstellung des Sitzes benötigt wird.

Das Betätigungselement 4 kann entweder als ein Handrad oder als ein elektrischer Motor mit Getriebe zum Antrieb der Stellwelle betrieben werden. Die Messung der Position der Rückenlehne 3 wird, wie oben beschrieben, von dem Sensor 7, der sich in der Rückenlehne 3 des Sitzes 1 befindet, erfasst. Diese Daten werden dann an das Sitzsteuergerät 11 weitergeleitet, das vorzugsweise einen Microcontroller beinhaltet, um die Steuerung des elektrischen Motors vorzunehmen. Dieses Sitzsteuergerät stellt eine der gespeicherten Sitzpositionen des Fahrzeugsitzes 1 ein. Die Position der Rückenlehne 3 ist nur eines der Signale, das hier verarbeitet wird. Weitere Signale sind beispielsweise die Angabe der Längseinstellung und der Höheneinstellung.

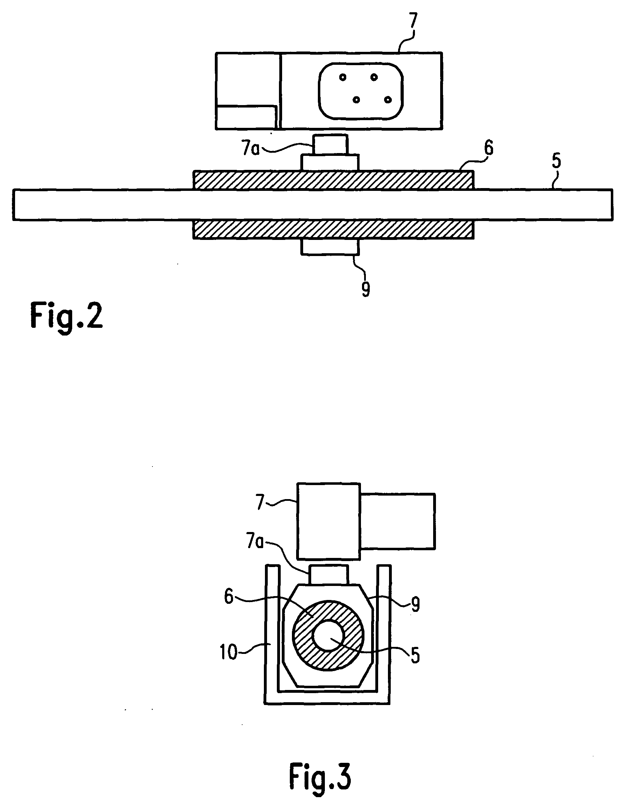

Figur 2 ist ein Längsschnitt, der die Positionierung des Erfassungsteils 7a, hier beispielsweise eines Magneten, und des Sensors 7 an dem Gewinderohr 6 in der Rückenlehne 3 zeigt. Das Gewinderohr 6 ist stationär, und in diesem Gewinderohr 6 bewegt sich die Stellwelle 5 bei ihrer Rotation in Längsrichtung. Der Magnet 7a wird mit Hilfe einer Gewindemutter 9 so an der Stellwelle 5 angebracht, dass er sich in Längsrichtung mit dem Gewinderohr 6 bewegt. Der gegenüber dem Gewinderohr 6 stationäre Sensor 7 erfasst diese lineare Bewegung des Magneten 7a.

Der Sensor 7 ist vorzugsweise aus einem weichmagnetischen Kern, zwei Erregerspulen und einer Sekundärspule, die sich zwischen den Erregerspulen befindet, aufgebaut. Der Magnet 7a ist beispielsweise ein Dauermagnet, der als Messobjekt dient. Dieser lässt sich in Bezug auf den weichmagnetischen Kern verschieben. Der Abstand des Magneten 7a von der Sekundärspule bzw. vom weichmagnetischen Kern, kann so groß gewählt werden, dass der weichmagnetische Kern gerade noch von dem Magnet 7a gesättigt wird. Die Windungen der Sekundärspule haben voneinander einen regelmäßigen Abstand, da sich dann ein von der Verschiebung des Magneten 7a weitgehend linear abhängiges Ausgangssignal ergibt. Die Wicklung um den Weichmagneten ist an eine Konstantstromquelle angeschlossen, die einen Wechselstrom mit konstanter Amplitude abgibt. Das lineare Ausgangssignal, dass die Position des Magneten 7a angibt, wird an den Anschlüssen der Sekundärspule abgenommen.

Figur 3 stellt einen Querschnitt der erfindungsgemäßen Vorrichtung dar. Die U-Schiene 10 der Rückenlehne 3 umfasst das stationäre Gewinderohr 6, in dem sich wiederum die Stellwelle 5 befindet. Der Magnet 7a befindet sich auf der Mitnahmemutter 9. Darüber ist der Sensor 7 angeordnet.

Diese Anordnung lässt eine Transformation von einem Winkel der Rückenlehne 3 in eine Linearbewegung zu. Der Sensor 7 ist im Sitz 1 integriert und misst somit eine Absolutposition inkremental ohne eine Referenz zu benötigen. Zur Kalibrierung des Sensors 7 wird die Rückenlehne 3 in ihre zwei Extremstellungen gebracht, das heißt so weit wie möglich nach vorne und so weit wie möglich nach hinten eingestellt. Die Stellwelle 5 bewegt sich zwischen diesen beiden Extrempositionen linear, das heißt die genaue Position der Rückenlehne 3 kann durch Extrapolation errechnet werden. Zum Beispiel, wenn die Extrempositionen der Rückenlehne 3 um 180 ° auseinanderliegen und die Stellwelle einen Weg von 180 mm zwischen diesen Extrempositionen zurücklegt, entspricht 1 ° Winkel 1 mm Weg. Auf diese Art und Weise wird der Winkel in eine Linearbewegung transformiert.

Das Airbagsteuergerät 11 benutzt diese linearen Daten, um wiederum den Winkel der Rückenlehne 3 zu berechnen, um dann mit dieser Information die aufzublasende Größe des Airbags zu berechnen.

## Patentansprüche

1. Vorrichtung zur Erfassung der Position einer Rückenlehne eines verstellbaren Fahrzeugsitzes, bestehend aus einem Sitzteil und der Rückenlehne, wobei zur Verstellung der Rückenlehne des Fahrzeugsitzes eine drehbare in Längsrichtung bewegbare Stellwelle vorgesehen ist,
**gekennzeichnet durch**
einen magnetischen Wegsensor, der ein Signal ausgibt, welches die Längsbewegung der Stellwelle repräsentiert, und
eine elektronische Verarbeitungseinheit zur Berechnung der Position der Rückenlehne aus dem vom Wegsensor ausgegebenen Signal.

2. Vorrichtung nach Anspruch 1, **dadurch gekennzeichnet, dass** der Wegsensor von kontaktlosem Typ ist, der so angeordnet ist, dass er die Stellwelle nicht berührt.

3. Vorrichtung nach einem der Ansprüche 1 bis 2, **dadurch gekennzeichnet, dass** der magnetische Wegsensor ein permanentmagnetischer Wegsensor ist, der ein lineares Wegsignal abgibt.

4. Vorrichtung nach einem der Ansprüche 1 bis 3, **dadurch gekennzeichnet, dass** sich der Wegsensor aus einem Erfassungsteil und einem bewegbaren Magneten zusammensetzt.

5. Vorrichtung nach einem der Ansprüche 1 bis 4, **dadurch gekennzeichnet, dass** die elektronische Verarbeitungseinheit ein Airbagsteuergerät ist.

6. Vorrichtung nach einem der Ansprüche 1 bis 4, **dadurch gekennzeichnet, dass** die elektronische Verarbeitungseinheit ein Sitzsteuergerät ist.

7. Fahrzeugsitz, enthaltend eine Vorrichtung nach einem der Ansprüche 1 bis 6, bestehend aus einem Sitzteil und einer Rückenlehne, **dadurch gekennzeichnet, dass** der Sitz zur Verstellung der Rückenlehne des Fahrzeugsitzes eine drehbare, in Längsrichtung bewegbare Stellwelle aufweist, die linear oder exzentrisch bewegbar ist.

8. Fahrzeugsitz nach Anspruch 7, **dadurch gekennzeichnet, dass** die Stellwelle mit einem Gewinderohr in der Rückenlehne zusammenwirkt, und dass der magnetische Wegsensor am Gewinderohr angebracht ist.

9. Fahrzeugsitz nach einem der Ansprüche 7 oder 8, **dadurch gekennzeichnet, dass** der Sitz einen elektrischen Motor hat, der mit der Stellwelle zu deren Antrieb mechanisch gekoppelt ist.

10. Verfahren zum Erfassen der Position der Rückenlehne eines verstellbaren Fahrzeugsitzes, mit folgenden Schritten:
Erzeugen eines Signals, welches die Längsbewegung einer Stellwelle repräsentiert, mittels eines magnetischen Wegsensors,
Berechnen der Position der Rückenlehne aus dem vom Wegsensor ausgegebenen Signal mittels einer elektronischen Verarbeitungseinheit.
